# EUROPÄISCHE PATENTSCHRIFT

(11) **EP 4 091 904 B1**
(45) Veröffentlichungstag und Bekanntmachung des Hinweises auf die Patenterteilung: **29.05.2024**
(21) Anmeldenummer: 22157649.9
(22) Anmeldetag: 21.02.2022
(51) Int. Cl.: B62B 3/02, B62B 5/00, B62B 5/06, B62B 3/16

(54) **TRANSPORTWAGEN**
TRANSPORT TROLLEY
CHARIOT DE TRANSPORT

(30) Priorität: 21.05.2021 DE 102021113283
(43) Veröffentlichungstag der Anmeldung: 23.11.2022
(73) Patentinhaber: Wanzl GmbH & Co. KGaA, 89340 Leipheim (DE)
(72) Erfinder: Wiedenmann, Peter, 87757 Derndorf (DE)

(56) Entgegenhaltungen:
- CN-A- 112 319 562
- DE-U1-202005 021 623
- DE-U1-202010 003 076
- KR-U- 20090 012 309

## Beschreibung

Die vorliegende Erfindung betrifft einen Transportwagen mit einem Grundgestell mit Rollen und mit einem klappbaren Boden, der relativ zum Grundgestell verschwenkbar ist.

Aus dem Stand der Technik sind bereits Transportwagen bekannt, die insbesondere im Einzelhandel und im Logistikbereich Verwendung finden. Ein Beispiel hierfür ist aus der DE 197 29 754 A1 und der DE 203 02 677 U1 bekannt.

Aus der KR 20090012309 U ist ein kippbarer Transportwagen bekannt, wobei die kippbare Transportwanne mit einem Federsystem bewegt werden kann.

Weiterhin zeigt die DE 20 2010 003 076 U1 einen Transportwagen mit einem Grundgestell mit Rollen und einem klappbaren Boden, der relativ zum Grundgestell verschwenkbar ist.

Es ist die Aufgabe der vorliegenden Erfindung, einen Transportwagen der eingangs genannten Art in vorteilhafter Weise hinsichtlich der Stapelbarkeit und der Aufnahme von Waren weiterzubilden.

Diese Aufgabe wird erfindungsgemäß gelöst durch einen Transportwagen mit den Merkmalen des Anspruchs 1. Danach ist vorgesehen, dass ein Transportwagen mit einem Grundgestell mit Rollen und mit einem klappbaren Boden bereitgestellt wird, der relativ zum Grundgestell verschwenkbar ist, weiter mit einem Kraftumlenkungselement und mit einem linear expandierbaren Verschwenkbewegungselement zur Unterstützung der Verschwenkbewegung des Bodens versehen ist, wobei der Boden in wenigstens einer Arbeitsstellung für die Ablage und den Transport von Waren auf dem Grundgestell aufliegt und in einer zweiten Nichtarbeitsstellung vom Boden ab- und/oder weggeklappt ist.

Die Erfindung basiert auf dem Grundgedanken, dass bei einem Transportwagen der klappbare Boden mittels eine Klappunterstützung hochgeklappt werden kann. Diese Unterstützung soll aber nicht nur allein durch ein linear expandierbares Verschwenkbewegungselement erfolgen, sondern mit einem zusätzlichen Kraftumlenkungselement. Dieses Kraftumlenkungselement soll ebenfalls an Verschwenkbewegung zumindest teilweise teilnehmen und diese unterstützen. Darüber hinaus kann vorgesehen sein, dass das Kraftumlenkungselement verschwenkbar um eine Drehachse am Grundgestell angelenkt ist und dass das Verschwenkbewegungselement exzentrisch am Kraftumlenkungselement angelenkt ist. Durch die exzentrische Anlenkung kann bewirkt werden, dass das Kraftumlenkungselement und das Verschwenkbewegungselement trotz gegenseitiger Kopplung zumindest teilweise unterschiedliche Bewegungen durchführen können. Außerdem kann durch die exzentrische Anlenkung das Kraftumlenkungselement durch das Verschwenkbewegungselement (oder auch umgekehrt) in Bewegung gesetzt werden. Denkbar ist beispielsweise, dass das Verschwenkbewegungselement federbelastet ist oder einen anderen geeigneten Antriebsmechanismus hat, sich durch eine entsprechende Betätigung in Gang setzt (z.B. Lösen einer Arretierung des Bodens) bzw. die Bewegung auslöst.

Außerdem ist vorgesehen, dass beim Überführen des Bodens von der Arbeitsstellung in die Nichtarbeitsstellung das Kraftumlenkungselement nur bei einem Teil der Verschwenkbewegung am Boden aufliegt und im letzten Teil der Verschwenkbewegung das Verschwenkbewegungselement ohne Unterstützung durch das Kraftumlenkungselement den Boden bewegt. Dies kann beispielsweise dadurch erreicht werden, dass im letzten Teil der Verschwenkbewegung das Kraftumlenkungselement den Boden nicht mehr berühren kann und dadurch die Bewegung des Bodens nur noch durch das Verschwenkbewegungselement erfolgt.

Insbesondere ist denkbar, dass das Kraftumlenkungselement nicht am Boden befestigt ist. Die Befestigung des Kraftumlenkungselements kann insbesondere am Grundgestell realisiert sein. Da die Aufgabe und Funktion des Kraftumlenkungselements im Wesentlichen darin bestehen soll, im ersten Teil der Verschwenkbewegung von der Arbeitsstellung in die Nichtarbeitsstellung zu bewegen, ist eine Anlenkung am Grundgestell günstig.

Außerdem ist möglich, dass das Kraftumlenkungselement ein Abrollelement aufweist, das derart beschaffen und angeordnet ist, dass es auf dem Boden, insbesondere einem Teil der Unterseite des Bodens abrollt. Hier kann beispielsweise eine Walze oder Rad vorgesehen sein. Denkbar ist hier auch, ein Abrollelement aus einem Werkstoff, der Gummi oder ein sonstiges Elastomer aufweist, zu verwenden.

In einer denkbaren Ausführung kann vorgesehen sein, dass das Verschwenkbewegungselement eine Gasdruckfeder ist und/oder umfasst.

Bei einer Gasdruckfeder ergibt sich auch der Vorteil, dass diese abhängig von der Auslegung der Gasdruckfeder eine einstellbare Öffnungscharakteristik mit entsprechendem Verlauf der bereitgestellten Kraft für die Bewegung des Bodens ermöglicht.

Die Nennkraft der Gasdruckfeder kann beispielsweise im Bereich von ca. 800-1000 Newton (N) liegen, wenn ein Boden mit einer Gewichtskraft von ca. 4,5-6,5 Kilogramm (kg) bewegt.

Denkbar ist insbesondere, dass im Zusammenwirken mit dem Kraftumlenkungselement im ersten Bereich der Bewegung das Kraftumlenkungselement und die Gasdruckfeder gemeinsam auf den Boden einwirken und diesen hochklappen. In dem Moment, in dem das Kraftumlenkungselement nicht mehr den Boden berührt, arbeitet die Gewichtskraft des Bodens gegen die Gasdruckfeder und bremst dadurch die Hochklappbewegung ab. Dies ist auch erwünscht, um eine Abbremsung im zweiten Teil der Hochklappbewegung bzw. zum Ende der Hochklappbewegung zu erreichen.

Des Weiteren kann vorgesehen sein, dass der Boden mittels einer Arretiervorrichtung arretierbar ist. Die Arretiervorrichtung kann beispielsweise ein Fusspedal aufweisen, mittels dessen eine Haltekralle oder ein Arretierriegel oder dergleichen betätigbar ist. Haltekralle oder Arretierriegel können beispielsweise in eine entsprechende Ausnehmung im Boden oder ein entsprechende Halteblech (mit Ausnehmungen für die Haltekralle oder den Arretierriegel) eingreifen.

Es kann vorgesehen sein, dass der Transportwagen stapelbar ist. Die Stapelbarkeit von Transportwagen ist eine wichtige Anforderung und Eigenschaft, da bei Nichtgebrauch des Transportwagens dieser möglichst platzsparend geparkt bzw. gelagert werden soll.

Außerdem kann vorgesehen sein, dass der Transportwagen eine federbelastete klappbare Deichsel aufweist. Durch eine klappbare Deichsel ist es möglich, mehrere Transportwagen zu koppeln oder den Transportwagen an ein Zugfahrzeug wie einen (Mini-)Traktor oder dergleichen anzuhängen.

Die Konstruktion der Deichsel kann auch unabhängig von der übrigen Konstruktion des Transportwagens genutzt werden. Dies wird hiermit auch explizit so offenbart, d.h. die Deichsel kann auch unabhängig von der übrigen Konstruktion des Transportwagens mit Kraftumlenkungselement und linear expandierbarem Verschwenkbewegungselement realisiert werden.

Des Weiteren in denkbar, dass die Deichsel einen Befestigungsrahmen und einen relativ zum Befestigungsrahmen schwenkbaren Deichselrahmen aufweist, wobei der Deichselrahmen mittels wenigstens eines zylindrischen Rohrteils drehbar im Befestigungsrahmen drehbar gelagert ist, wobei der Rohrteil Federaufnahmen für eine Feder aufweist und mittels der Feder der Befestigungsrahmen und der Deichselrahmen gegeneinander federbelastet verdrehbar sind und zugleich die Feder als Fixierungselement zur Fixierung der Position von Befestigungsrahmen relativ zum Deichselrahmen dient. Durch diese Anordnung der Feder wird es möglich, einerseits die Feder als Element zu nutzen, dass eine Federbelastung der Deichsel ermöglicht und die Deichsel in einer vordefinierten Position halten kann. Anderseits wird durch die Feder aufgrund des Einsteckens in die Federaufnahmen eine Halte- und Fixierfunktion realisiert, die dazu führt, dass durch die Feder noch eine zusätzliche Funktion bereitgestellt wird, d.h. eine Funktionsintegration stattfindet.

Weitere Einzelheiten und Vorteile der Erfindungen sollen nun anhand eines in den Zeichnungen näher dargestellten Ausführungsbeispiels erläutert werden.

Es zeigen:
- **Fig. 1**: eine perspektivische Darstellung eines erfindungsgemäßen Ausführungsbeispiels eines Transportwagens;
- **Fig. 2**: eine weitere perspektivische Darstellung des Transportwagens gemäß **Fig. 1** mit einer Detaildarstellung;
- **Fig. 3**: eine weitere perspektivische Darstellung des Transportwagens gemäß **Fig. 1** mit einer Detaildarstellung;
- **Fig. 4**: eine Seitenansicht des Transportwagens gemäß **Fig. 1** in der Arbeitsstellung;
- **Fig. 5**: eine Frontansicht des Transportwagens gemäß **Fig. 1** in der Arbeitsstellung;
- **Fig. 6**: eine Draufsicht auf den Transportwagen gemäß **Fig. 1****;**
- **Fig. 7**: eine Seitenansicht des Transportwagens gemäß **Fig. 1** in der Schwenkbewegung;
- **Fig. 8**: eine Seitenansicht des Transportwagens gemäß **Fig. 1** in der Nichtarbeitsstellung;
- **Fig. 9**: eine Seitenansicht mit einer Detaildarstellung von Kraftumlenkungselement und Verschwenkbewegungselement des Transportwagens gemäß **Fig. 1** in der Arbeitsstellung;
- **Fig. 10**: eine Seitenansicht mit einer Detaildarstellung von Kraftumlenkungselement und Verschwenkbewegungselement des Transportwagens gemäß **Fig. 1** in der Verschwenkbewegung;
- **Fig. 11**: eine Seitenansicht mit einer Detaildarstellung von Kraftumlenkungselement und Verschwenkbewegungselement des Transportwagens gemäß **Fig. 1** in der Nichtarbeitsstellung;
- **Fig. 12**: eine Seitenansicht eines Ausführungsbeispiels einer Deichsel des Transportwagens gemäß **Fig. 1****;**
- **Fig. 13**: eine Draufsicht der Deichsel des Transportwagens gemäß **Fig. 12****;**
- **Fig. 14**: eine Rückansicht der Deichsel des Transportwagens gemäß **Fig. 12****;**
- **Fig. 15**: eine perspektivische Ansicht der Deichsel gemäß **Fig. 12** und **Fig. 13****;**
- **Fig. 16**: eine Explosionszeichnung der Deichsel gemäß **Fig. 14****;** und
- **Fig. 17**: ein Diagramm des Kraftverlaufs der Gasdruckfeder gemäß Ausführungsbeispiel des Transportwagens gemäß **Fig. 1****.**

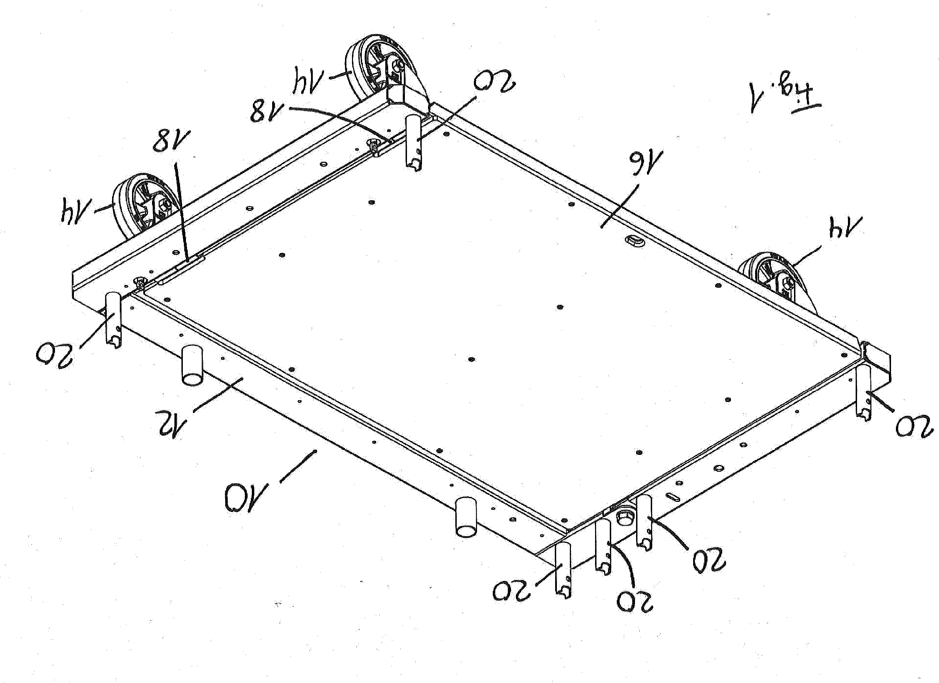

**Fig. 1** zeigt ein erfindungsgemäßes Ausführungsbeispiel eines Transportwagens 10. Der Transportwagen 10 ist ein stapelbarer Transportwagen 10, wie er beispielsweise zur Beförderung von Lasten im Logistikbereich (z.B. Handling von Postpaketen) verwendet wird.

Der Transportwagen 10 weist dabei ein Grundgestell 12 mit Rollen 14 auf.

Des Weiteren ist ein klappbarer Boden 16 vorgesehen.

Der klappbare Boden 16 ist mittels Schwenkscharnieren 18 am Grundgestell 12 schwenkbar angelenkt.

Wie dies weiter aus **Fig. 1** ersichtlich ist, sind am Grundgestell 12 senkrecht aufragende Befestigungszapfen 20 vorgesehen, die zur Befestigung von Gittern oder Seitenwänden dienen. Diese sind in **Fig. 1** nicht näher dargestellt, entsprechen aber den derzeit handelsüblichen Gittern oder Seitenwänden, wie sie bei derzeitigen Transportwagen Anwendung finden.

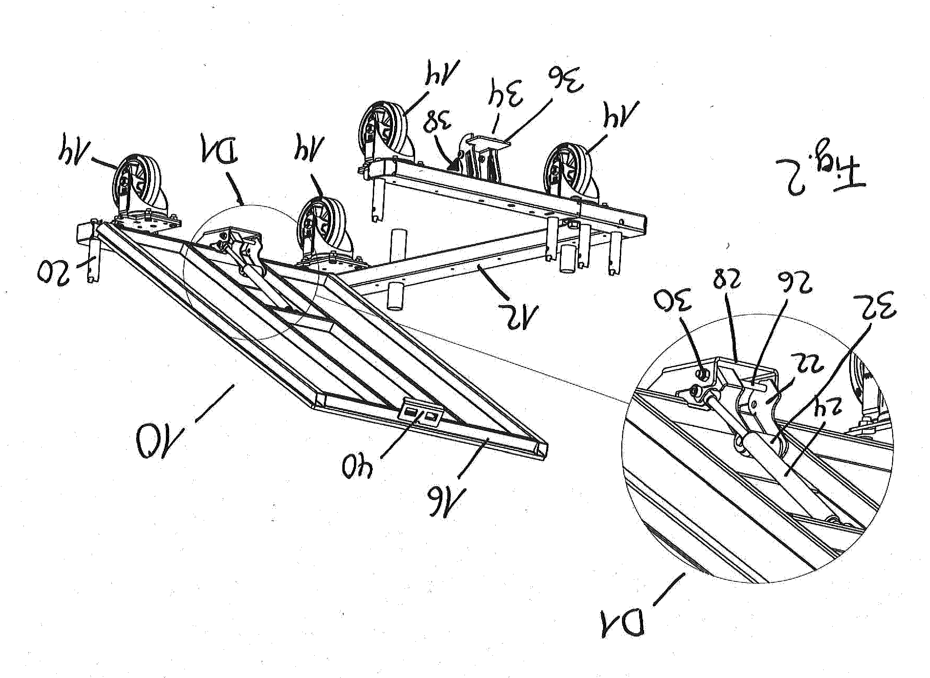

**Fig. 2** zeigt eine weitere perspektivische Darstellung des Transportwagens gemäß **Fig. 1** während der Verschwenkbewegung von der Arbeitsstellung (d.h. Boden 16 am Grundgestell 12 arretiert) in die Nichtarbeitsstellung (d.h. Boden 16 hochgeklappt) mit einer Detaildarstellung D1.

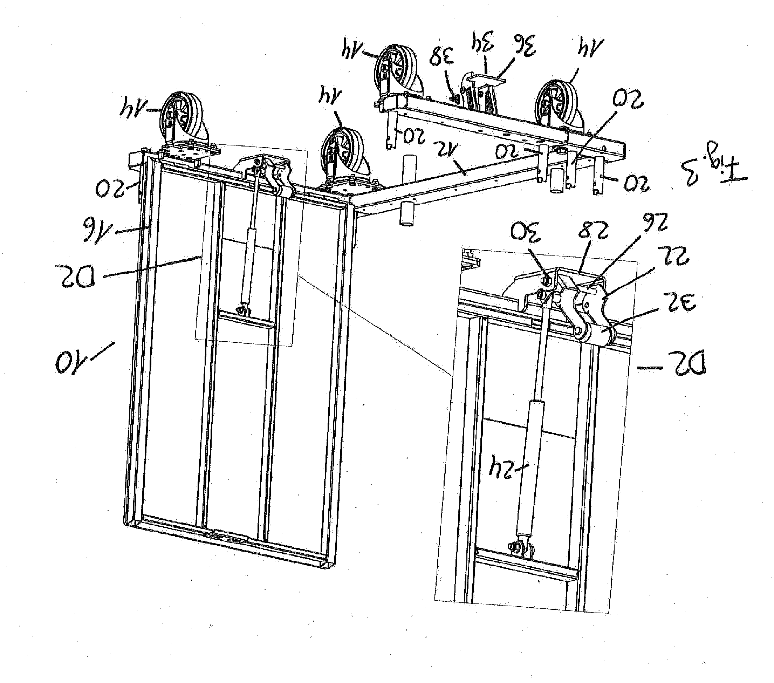

**Fig. 3** zeigt eine weitere perspektivische Darstellung des Transportwagens gemäß **Fig. 1** in der Nichtarbeitsstellung mit einer Detaildarstellung D2.

Am Grundgestell 12 ist ein Kraftumlenkungselement 22 und ein linear expandierbares Verschwenkbewegungselement 24 zur Unterstützung der Verschwenkbewegung des Bodens 16 vorgesehen.

Das Verschwenkbewegungselement 24 ist hier als Gasdruckfeder ausgebildet.

Wie in **Fig. 1-3** ersichtlich, liegt der Boden in wenigstens einer Arbeitsstellung (siehe **Fig. 1****)** für die Ablage und den Transport von Waren auf dem Grundgestell auf und ist in einer zweiten Nichtarbeitsstellung (siehe z.B. **Fig. 3****)** vom Boden ab- und/oder weggeklappt bzw. hochgeklappt.

Das Kraftumlenkungselement 22 ist verschwenkbar um eine Drehachse 26 am Grundgestell 12 angelenkt und nicht am Boden 16 befestigt.

Hierzu ist am Grundgestell 12 ein Halter 28 befestigt (hier angeschweißt, aber denkbar wäre auch eine Verschraubung oder sonstige geeignete Befestigungsart). In dem Halter ist ein Bolzen 30 befestigt, der die Drehachse 26 ausbildet, um die das Kraftumlenkungselement 22 verschwenkt werden kann.

Das Kraftumlenkungselement 22 ist hier als ein verschwenkbarer Hebel ausgebildet, der an seinem freien Ende eine Rolle 32 trägt. Die Rolle 32 rollt auf der Unterseite des Bodens 16 ab, solange sich der Boden 16 und das Kraftumlenkungselement 22 berühren.

Das Verschwenkbewegungselement 24 ist exzentrisch am Kraftumlenkungselement 22 angelenkt.

Außerdem ist das Verschwenkbewegungselement 24 am Boden 16 an dessen Unterseite mittig angelenkt, hier an einer Rahmenkonstruktion des Bodens 16.

Die Funktion lässt sich wie folgt beschreiben:
Beim Überführen des Bodens 16 von der Arbeitsstellung in die Nichtarbeitsstellung liegt das Kraftumlenkungselement 22 nur bei einem Teil der Verschwenkbewegung am Boden 16 auf und im letzten Teil der Verschwenkbewegung wird der Boden 16 durch das Verschwenkbewegungselement 24 bewegt und zwar ohne Unterstützung durch das Kraftumlenkungselement 22.

Es ist also vorgesehen, dass im Zusammenwirken mit dem Kraftumlenkungselement 22 im ersten Bereich der Bewegung das Kraftumlenkungselement 22 und die Gasdruckfeder 24 gemeinsam auf den Boden 16 einwirken und diesen hochklappen. In dem Moment, in dem das Kraftumlenkungselement nicht mehr den Boden berührt, arbeitet die Gewichtskraft des Bodens 16 gegen die Gasdruckfeder 24 und bremst dadurch die Hochklappbewegung ab. Dies ist auch erwünscht, um eine Abbremsung im zweiten Teil der Hochklappbewegung bzw. zum Ende der Hochklappbewegung zu erreichen.

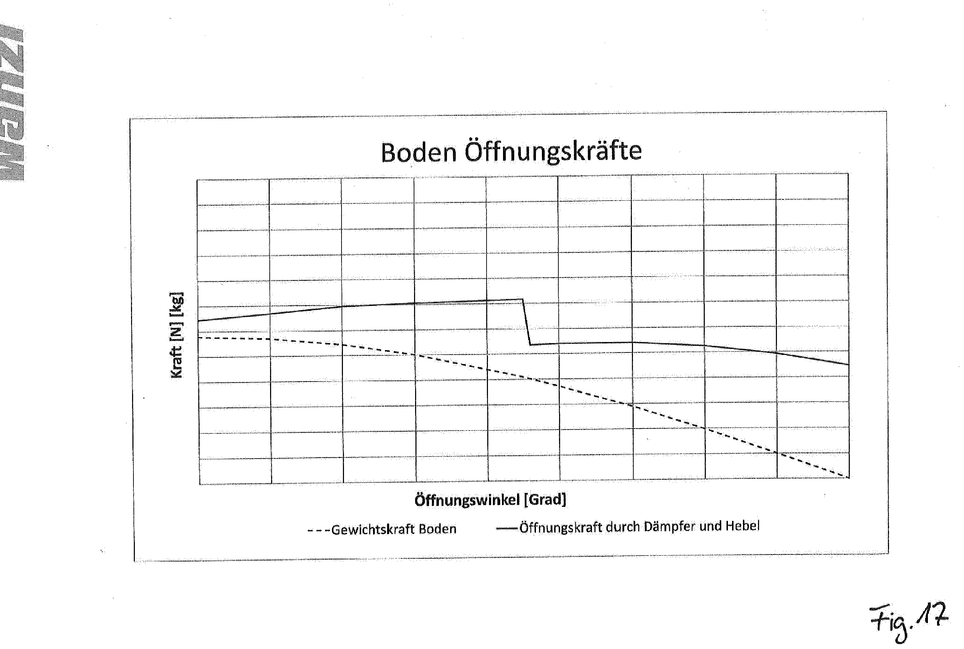

**Fig. 17** zeigt ein Diagramm des Kraftverlaufs der Gasdruckfeder 24.

Die Gasdruckfeder 24 weist eine Nennkraft von 900 N auf. Die Gewichtskraft des Bodens 16 beträgt ca. 5,5 kg, die Gasdruckfeder 24 bringt zu Beginn ca. 6,5 kg auf, d.h. einen Kraftüberschuss, um den Boden 16 prozesssicher anzuheben. Die Kurve des Kraftverlaufs erreicht bei einem Öffnungswinkel von ca. 45° den Punkt, bei dem das Kraftumlenkungselement 22 den Boden 16 nicht mehr berührt und somit nicht mehr den Boden 16 abstützen kann. Dadurch arbeitet nun die Gewichtskraft des Bodens 16 auf gegen die Öffnungsbewegung der Gasdruckfeder 24, was auch zu einem Absinken der Kurve des Kraftverlaufs führt. Dies ist erwünscht, um gegen Ende der Öffnungsbewegung keinen zu hohen Kraftüberschuss zu haben und dient dazu, ein "hartes Anschlagen" des Bodens zu vermeiden.

Der Boden beschleunigt also mit anderen Worten bis zur Ausklinkung der Kraftumlenkung durch das Kraftumlenkungselement 22. Nach der Ausklinkung wird der Boden 16 durch die Gasdruckfeder 24 in die obere Endlage geschoben. Durch die Ausklinkung des Kraftumlenkungselements 22 und der so verringerten Dämpferkraft wird ein sanftes Erreichen der oberen Endlage (d.h. Nichtarbeitsstellung) realisiert.

Wie weiter in **Fig. 1-3** ersichtlich ist, weist der Transportwagen 10 eine Arretiervorrichtung 34 auf.

Die Arretiervorrichtung 34 weist im gezeigten Ausführungsbeispiel ein Fuß pedal 36 auf.

Außerdem weist die Arretiervorrichtung einen Arretierriegel 38 auf.

Mittels des Fuß Pedals 36 ist der Arretierriegel 38 betätigbar.

Der Boden 16 weist als Gegenstück eine Arretierlasche 40 auf. Die Arretierlasche 40 weist hier zwei Öffnungen auf, in die der Arretierriegel 38 eingreift.

Wird das Fuß pedal 36 betätigt, so wird der Arretierriegel 38 zurückgezogen aus der Arretierlasche 40 und gibt den Boden 16 frei. Die Gasdruckfeder 24 drückt dann den Boden 16 nach oben, so dass ein "Hochklappen" aus der Arbeitsstellung in die Nichtarbeitsstellung stattfindet.

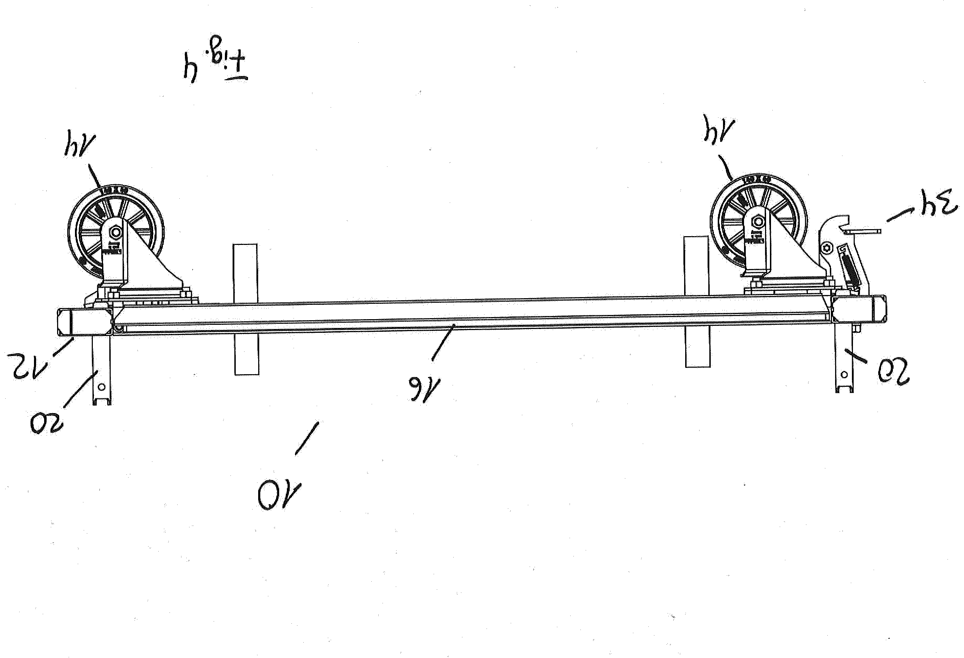

**Fig. 4** zeigt eine Seitenansicht des Transportwagens 10 in der Arbeitsstellung.

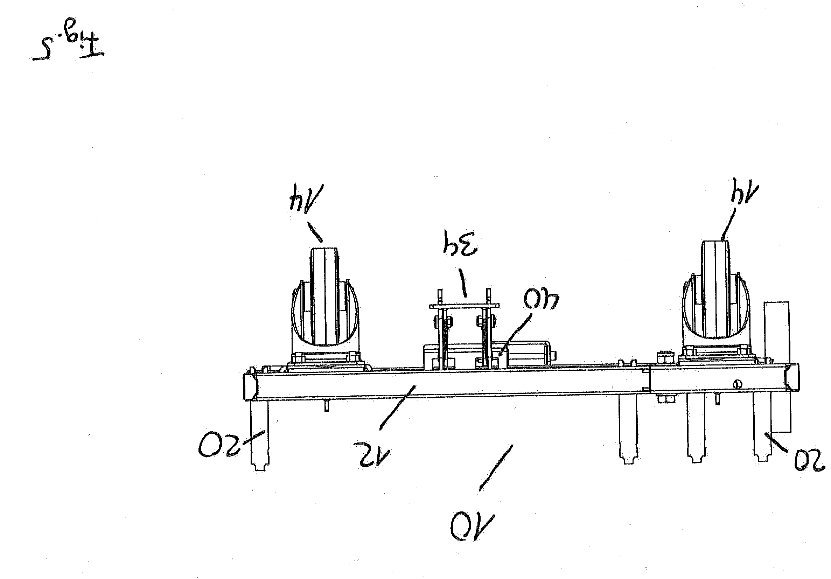

**Fig. 5** zeigt weiter eine Frontansicht des Transportwagens 10 in der Arbeitsstellung.

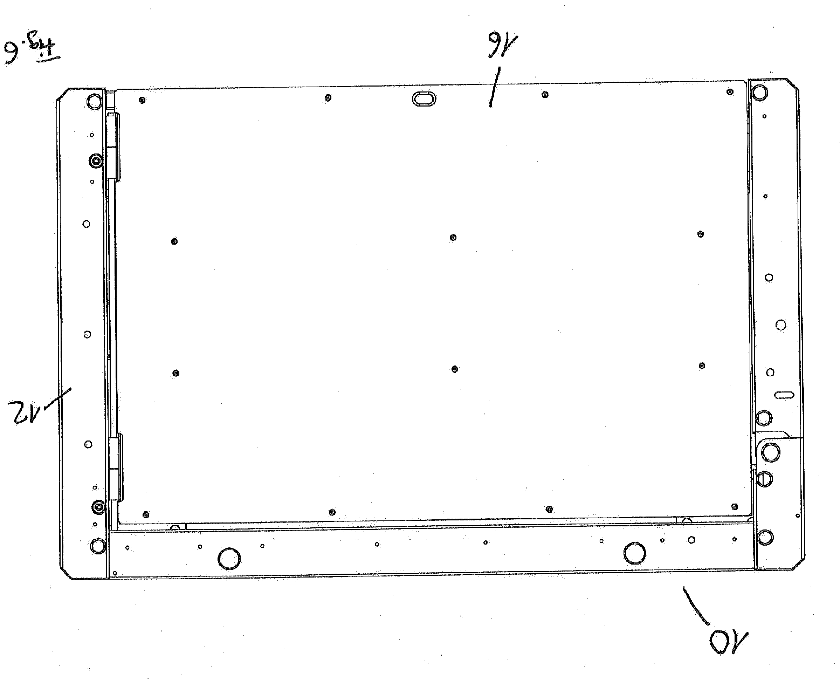

**Fig. 6** zeigt eine Draufsicht auf den Transportwagen 10.

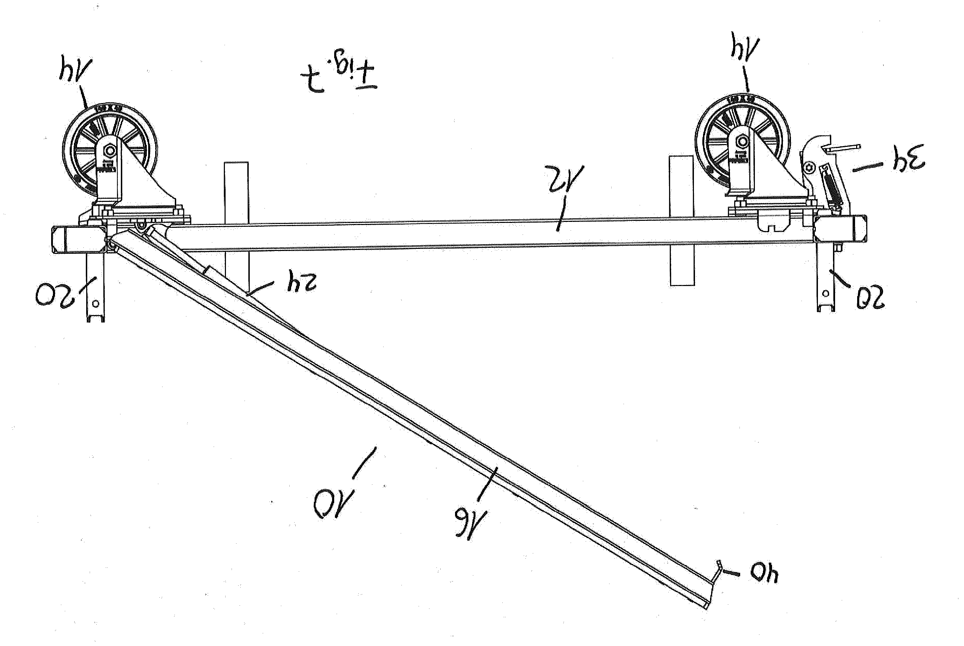

**Fig. 7** zeigt eine Seitenansicht des Transportwagens 10 in der Schwenkbewegung.

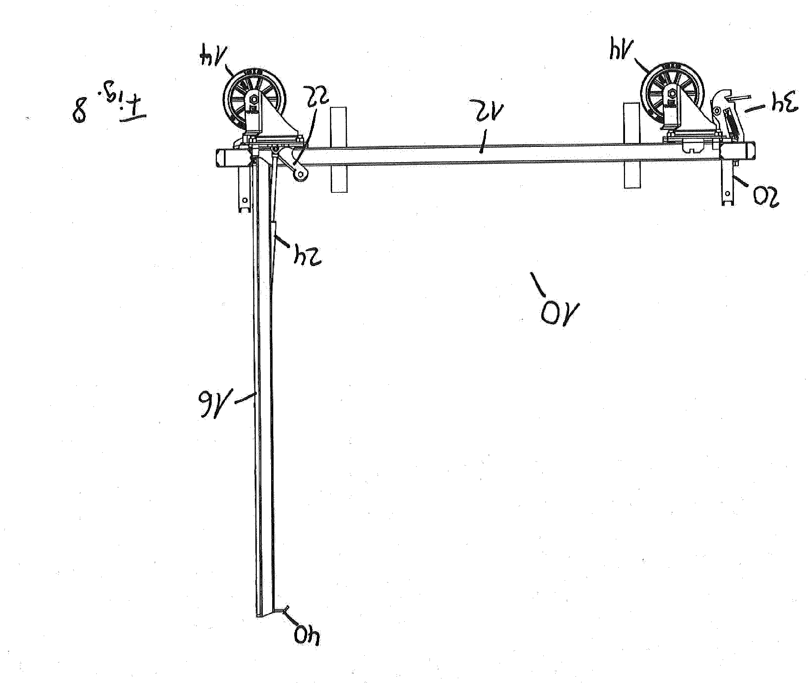

**Fig. 8** eine Seitenansicht des Transportwagens 10 in der Nichtarbeitsstellung.

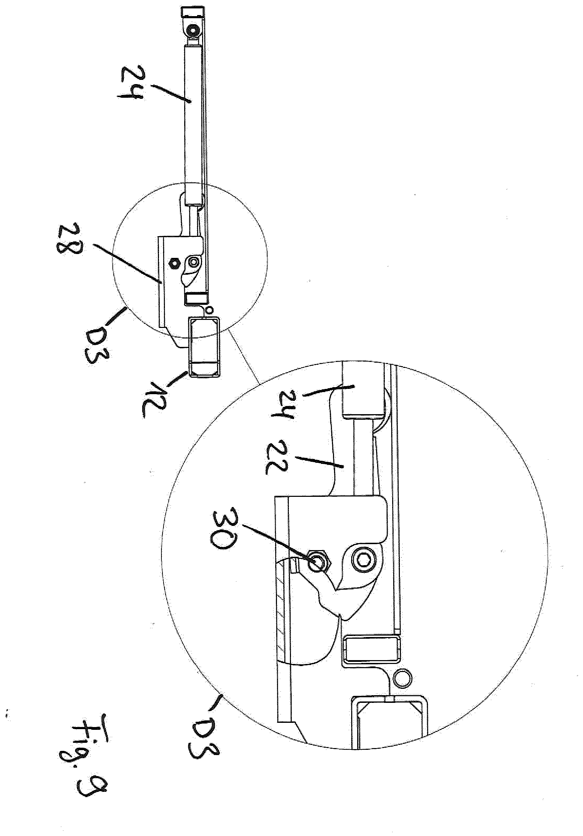

**Fig. 9** zeigt eine Seitenansicht mit einer Detaildarstellung D3 von Kraftumlenkungselement 22 und Verschwenkbewegungselement 24 des Transportwagens 10 in der Arbeitsstellung.

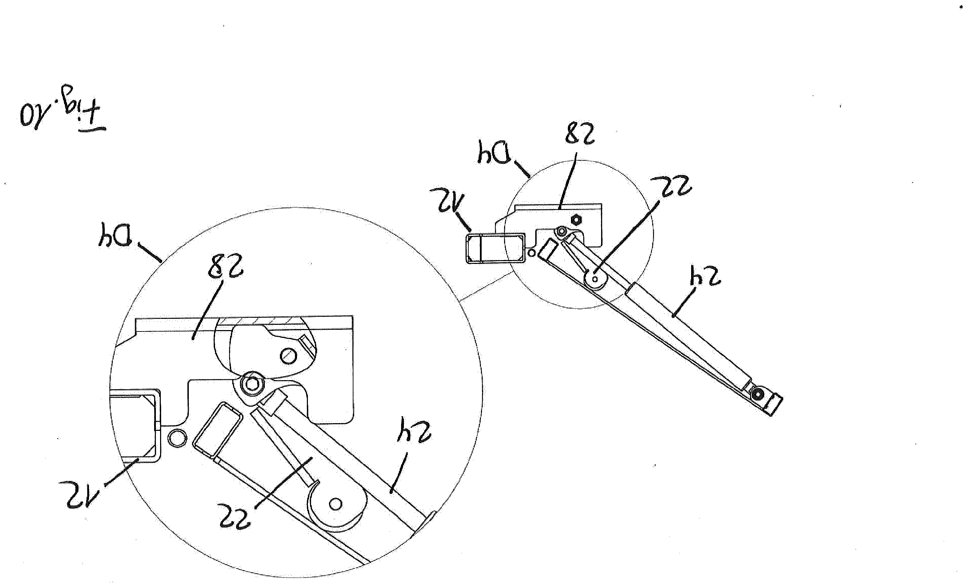

**Fig. 10** zeigt eine Seitenansicht mit einer Detaildarstellung D4 von Kraftumlenkungselement 22 und Verschwenkbewegungselement 24 des Transportwagens 10 in der Verschwenkbewegung.

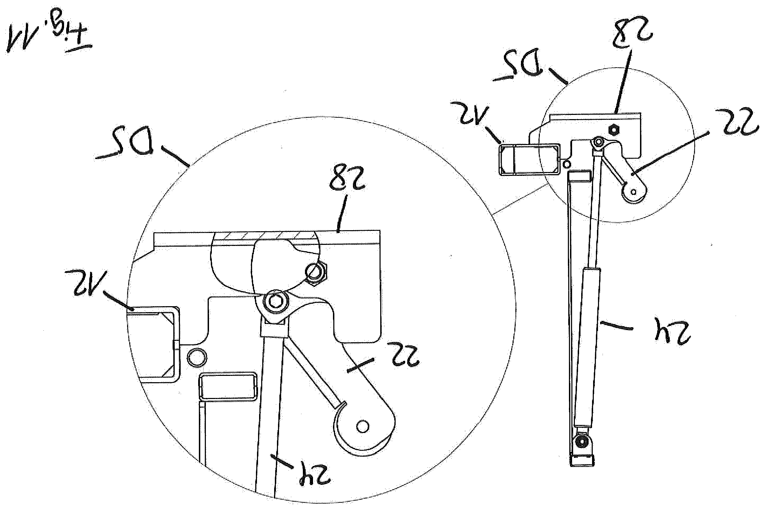

**Fig. 11** zeigt eine Seitenansicht mit einer Detaildarstellung D5 von Kraftumlenkungselement 22 und Verschwenkbewegungselement 24 des Transportwagens 10 in der Nichtarbeitsstellung.

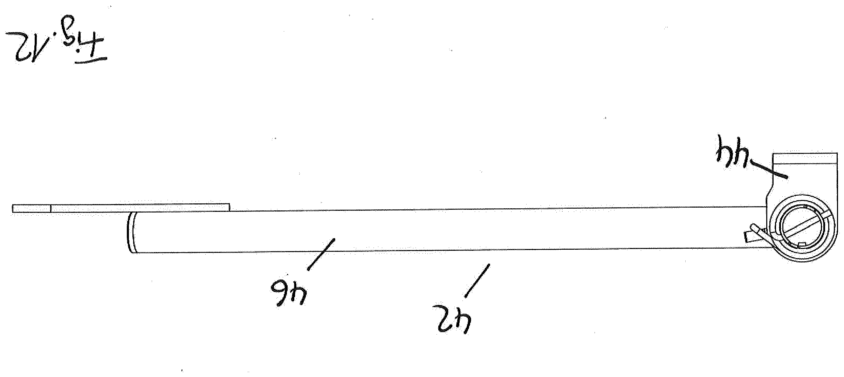

**Fig. 12** zeigt weiter eine Seitenansicht eines Ausführungsbeispiels einer Deichsel 42 des Transportwagens 10 gemäß **Fig. 1****.**

Wie in **Fig. 12** ersichtlich ist, weist der Transportwagen 10 eine federbelastete klappbare Deichsel 42 auf.

Die Deichsel 42 weist einen Befestigungsrahmen 44 und einen relativ zum Befestigungsrahmen schwenkbaren Deichselrahmen 46 auf.

Der Deichselrahmen 46 ist dabei mittels wenigstens eines zylindrischen Rohrteils 48 drehbar im Befestigungsrahmen 44 drehbar gelagert.

Der Deichselrahmen 46 ist dabei relativ zum zylindrischen Rohrteil 48 verdrehbar und auf das Rohrteil 48 aufgesteckt.

Das Rohrteil 48 weist Federaufnahmen 50 in Form von Schlitzen 50 für eine Feder 52 auf und mittels der Feder 52 sind der Befestigungsrahmen 44 und der Deichselrahmen 46 gegeneinander federbelastet verdrehbar.

Die Schlitze 50 sind nach Art eines Bajonettverschlusses ausgebildet und halten die Feder 52.

Am Deichselrahmen 46 ist auch ein Anschlag 54 vorgesehen, gegen den die Feder 52 drehen und sich spannen kann.

Zugleich die Feder als Fixierungselement zur Fixierung der Position von Befestigungsrahmen relativ zum Deichselrahmen dient.

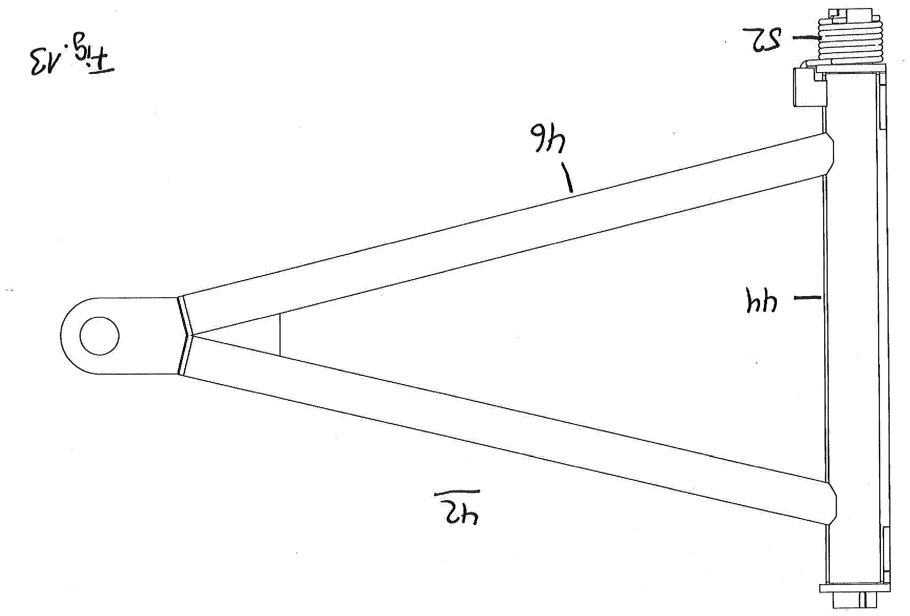

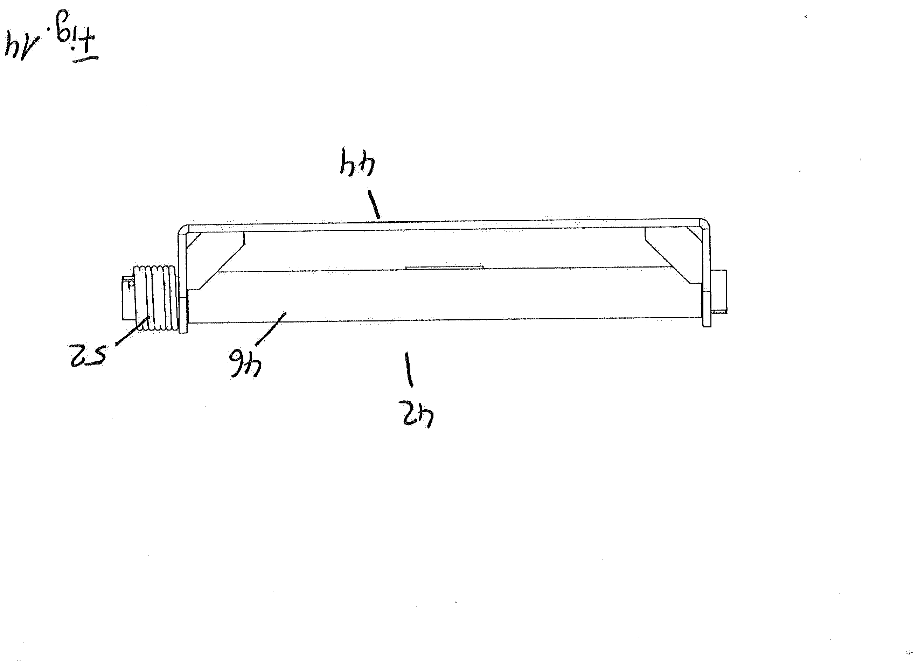

**Fig. 13** zeigt eine Draufsicht und **Fig. 14** zeigt eine Rückansicht der Deichsel 42 des Transportwagens 10.

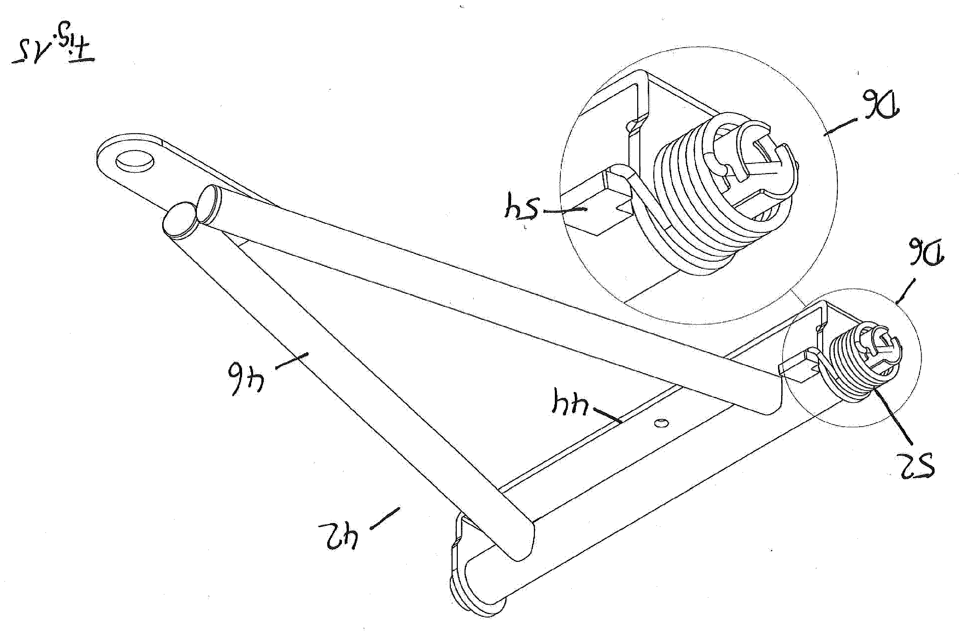

**Fig. 15** zeigt eine perspektivische Ansicht der Deichsel 42 gemäß **Fig. 12** und **Fig. 13** mit der Detaildarstellung D6.

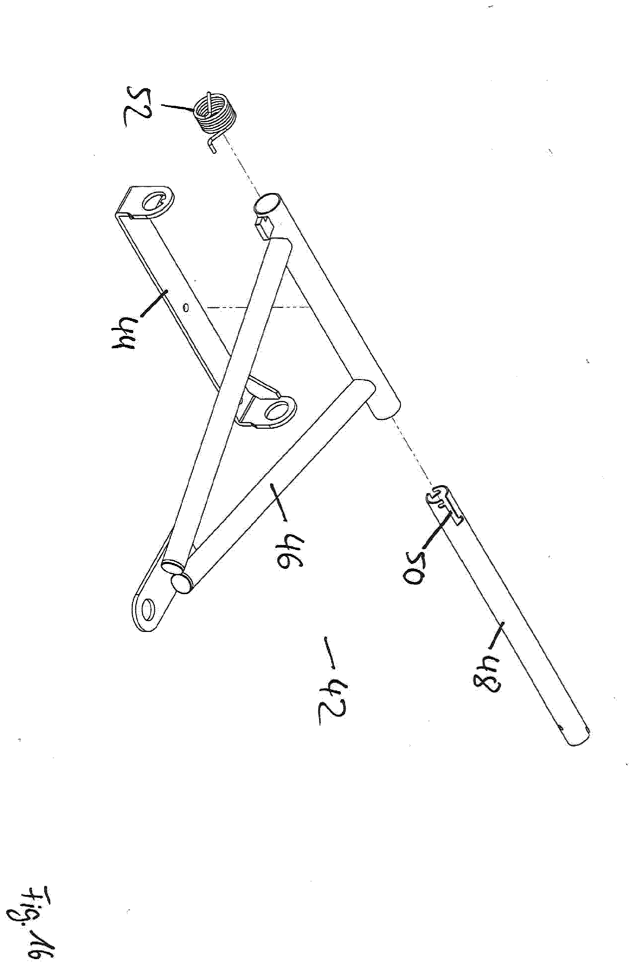

**Fig. 16** zeigt eine Explosionszeichnung der Deichsel 42 gemäß **Fig. 14****.**

### Bezugszeichen

- 10: Transportwagen
- 12: Grundgestell
- 14: Rolle
- 16: Boden
- 18: Schwenkscharnier
- 20: Befestigungszapfen
- 22: Kraftumlenkungselement
- 24: Verschwenkbewegungselement, Gasdruckfeder
- 26: Drehachse
- 28: Halter
- 30: Bolzen
- 32: Rolle
- 34: Arretiervorrichtung
- 36: Fuß pedal
- 38: Arretierriegel
- 40: Arretierlasche
- 42: Deichsel
- 44: Befestigungsrahmen
- 46: Deichselrahmen
- 48: Rohrteil
- 50: Federaufnahme
- 52: Feder
- 54: Anschlag
- D1: Detaildarstellung 1
- D2: Detaildarstellung 2
- D3: Detaildarstellung 3
- D4: Detaildarstellung 4
- D5: Detaildarstellung 5
- D6: Detaildarstellung 6

## Patentansprüche

1. Transportwagen mit einem Grundgestell (12) mit Rollen (14) und mit einem klappbaren Boden (16), der relativ zum Grundgestell (12) verschwenkbar ist, mit einem Kraftumlenkungselement (22) und mit einem linear expandierbaren Verschwenkbewegungselement (24) zur Unterstützung der Verschwenkbewegung des Bodens (16), wobei der Boden (16) in wenigstens einer Arbeitsstellung für die Ablage und den Transport von Waren auf dem Grundgestell (12) aufliegt und in einer zweiten Nichtarbeitsstellung vom Grundgestell (12) ab- und/oder weggeklappt ist,
**dadurch gekennzeichnet, dass**
beim Überführen des Bodens (16) von der Arbeitsstellung in die Nichtarbeitsstellung das Kraftumlenkungselement (22) nur bei einem Teil der Verschwenkbewegung am Boden (16) aufliegt und im letzten Teil der Verschwenkbewegung das Verschwenkbewegungselement (24) ohne Unterstützung durch das Kraftumlenkungselement (22) den Boden (16) bewegt.

2. Transportwagen (10) nach Anspruch 1,
**dadurch gekennzeichnet, dass**
Kraftumlenkungselement (22) verschwenkbar um eine Drehachse (26) am Grundgestell (12) angelenkt ist und dass das Verschwenkbewegungselement (24) exzentrisch am Kraftumlenkungselement (22) angelenkt ist.

3. Transportwagen (10) nach einem der vorhergehenden Ansprüche,
**dadurch gekennzeichnet, dass**
das Kraftumlenkungselement (22) nicht am Boden (16) befestigt ist.

4. Transportwagen (10) nach einem der vorhergehenden Ansprüche,
**dadurch gekennzeichnet, dass**
das Kraftumlenkungselement (22) ein Abrollelement (32) aufweist, das derart beschaffen und angeordnet ist, dass es auf dem Boden (16), insbesondere einem Teil der Unterseite des Bodens (16) abrollt.

5. Transportwagen (10) nach einem der vorhergehenden Ansprüche,
**dadurch gekennzeichnet, dass**
das Verschwenkbewegungselement (24) eine Gasdruckfeder (24) ist und/oder umfasst.

6. Transportwagen (10) nach einem der vorhergehenden Ansprüche,
**dadurch gekennzeichnet, dass**
der Boden (16) mittels einer Arretiervorrichtung (34) arretierbar ist.

7. Transportwagen (10) nach einem der vorhergehenden Ansprüche,
**dadurch gekennzeichnet, dass**
der Transportwagen (10) stapelbar ist.

8. Transportwagen (10) nach Anspruch 7, **dadurch gekennzeichnet**,
**dadurch gekennzeichnet, dass**
der Transportwagen (10) eine federbelastete klappbare Deichsel (42) aufweist.

9. Transportwagen (10) nach Anspruch 8,
**dadurch gekennzeichnet, dass**
die Deichsel (42) einen Befestigungsrahmen (44) und einen relativ zum Befestigungsrahmen (44) schwenkbaren Deichselrahmen (46) aufweist, wobei der Deichselrahmen (46) mittels wenigstens eines zylindrischen Rohrteils (48) drehbar im Befestigungsrahmen (44) drehbar gelagert ist, wobei der Rohrteil (48) Federaufnahmen (50) für eine Feder (52) aufweist und mittels der Feder (52) der Befestigungsrahmen (44) und der Deichselrahmen (46) gegeneinander federbelastet verdrehbar sind und zugleich die Feder (52) als Fixierungselement zur Fixierung der Position von Befestigungsrahmen (44) relativ zum Deichselrahmen (46) dient.

## Claims

1. Transport trolley having a main framework (12) with castors (14) and having a swing-action base (16), which can be pivoted relative to the main framework (12), having a force-deflection element (22) and having a pivoting-movement element (24), which can be expanded in a linear manner and is intended to assist the pivoting movement of the base (16), wherein the base (16), in at least one operating position for depositing and transporting goods, bears against the main framework (12) and, in a second, non-operating position, is swung out and/or away from the main framework (12), **characterized in that,**
when the base (16) is being transferred from the operating position into the non-operating position, the force-deflection element (22) bears against the base (16) only during part of the pivoting movement and, in the last part of the pivoting movement, the pivoting-movement element (24) moves the base (16) without being assisted by the force-deflection element (22).

2. Transport trolley (10) according to Claim 1,
**characterized in that**
the force-deflection element (22) is articulated on the main framework (12) so as to be able to pivot about a rotary pin (26) and **in that** the pivoting-movement element (24) is articulated eccentrically on the force-deflection element (22).

3. Transport trolley (10) according to either of the preceding claims, **characterized in that**
the force-deflection element (22) is not fastened to the base (16).

4. Transport trolley (10) according to one of the preceding claims,
**characterized in that**
the force-deflection element (22) has a rolling element (32), which is designed and arranged in such a manner that it rolls on the base (16), in particular on part of the underside of the base (16).

5. Transport trolley (10) according to one of the preceding claims,
**characterized in that**
the pivoting-movement element (24) is and/or comprises a gas-pressure spring (24).

6. Transport trolley (10) according to one of the preceding claims,
**characterized in that**
the base (16) can be arrested by means of an arresting device (34).

7. Transport trolley (10) according to one of the preceding claims,
**characterized in that**
the transport trolley (10) can be stacked.

8. Transport trolley (10) according to Claim 7, **characterized in that characterized in that**
the transport trolley (10) has a spring-loaded swing-action drawbar (42).

9. Transport trolley (10) according to Claim 8,
**characterized in that**
the drawbar (42) has a fastening frame (44) and a drawbar frame (46), which can be pivoted relative to the fastening frame (44), wherein the drawbar frame (46) is rotatably mounted in the fastening frame (44) so as to be able to rotate by means of at least one cylindrical tube part (48), wherein the tube part (48) has spring receptacles (50) for a spring (52), and, by means of the spring (52), the fastening frame (44) and the drawbar frame (46) can be rotated with respect to one another in a spring-loaded manner and, at the same time, the spring (52) is used as a fixing element for fixing the position of the fastening frame (44) relative to the drawbar frame (46).

## Revendications

1. Chariot de transport avec un châssis de base (12) avec des roulettes (14) et avec un fond rabattable (16) qui peut pivoter par rapport au châssis de base (12), avec un élément de déviation de force (22) et avec un élément de mouvement de pivotement (24) linéairement expansible pour assister le mouvement de pivotement du fond (16), le fond (16) reposant sur le châssis de base (12) dans au moins une position de travail pour le dépôt et le transport de marchandises et étant rabattu et/ou éloigné du châssis de base (12) dans une deuxième position de non-travail,
**caractérisé en ce que**
lors du transfert du fond (16) de la position de travail à la position de non-travail, l'élément de déviation de force (22) ne repose sur le fond (16) que pendant une partie du mouvement de pivotement et, dans la dernière partie du mouvement de pivotement, l'élément de mouvement de pivotement (24) déplace le fond (16) sans l'assistance de l'élément de déviation de force (22).

2. Chariot de transport (10) selon la revendication 1, **caractérisé en ce que**
l'élément de déviation de force (22) est articulé de manière pivotante autour d'un axe de rotation (26) sur le châssis de base (12) et **en ce que** l'élément de mouvement de pivotement (24) est articulé de manière excentrée sur l'élément de déviation de force (22).

3. Chariot de transport (10) selon l'une quelconque des revendications précédentes,
**caractérisé en ce que**
l'élément de déviation de force (22) n'est pas fixé au fond (16).

4. Chariot de transport (10) selon l'une quelconque des revendications précédentes,
**caractérisé en ce que**
l'élément de déviation de force (22) présente un élément de roulement (32) conçu et agencé de manière à rouler sur le fond (16), notamment sur une partie du côté inférieur du fond (16).

5. Chariot de transport (10) selon l'une quelconque des revendications précédentes,
**caractérisé en ce que**
l'élément de mouvement de pivotement (24) est et/ou comprend un ressort à pression de gaz (24).

6. Chariot de transport (10) selon l'une quelconque des revendications précédentes,
**caractérisé en ce que**
le fond (16) peut être bloqué au moyen d'un dispositif de blocage (34).

7. Chariot de transport (10) selon l'une quelconque des revendications précédentes,
**caractérisé en ce que**
le chariot de transport (10) est empilable.

8. Chariot de transport (10) selon la revendication 7, **caractérisé en ce que**
le chariot de transport (10) présente un timon rabattable (42) sollicité par ressort.

9. Chariot de transport (10) selon la revendication 8, **caractérisé en ce que**
le timon (42) présente un cadre de fixation (44) et un cadre de timon (46) pivotant par rapport au cadre de fixation (44), le cadre de timon (46) étant monté de manière rotative dans le cadre de fixation (44) au moyen d'au moins une pièce tubulaire cylindrique (48), la pièce tubulaire (48) présentant des logements de ressort (50) pour un ressort (52) et, au moyen du ressort (52), le cadre de fixation (44) et le cadre de timon (46) pouvant tourner l'un par rapport à l'autre de manière sollicitée par ressort et, en même temps, le ressort (52) servant d'élément de fixation pour fixer la position du cadre de fixation (44) par rapport au cadre de timon (46).
